# EUROPEAN PATENT SPECIFICATION

(11) **EP 0 822 386 B1**
(45) Date of publication and mention of the grant of the patent: **26.05.2004**
(21) Application number: 96830611.8
(22) Date of filing: 05.12.1996
(51) Int. Cl.: G01B 3/08

(54) **Telescopic measurement instrument provided with a protective device for protecting the ground bearing ends thereof**
Teleskopisches Messlineal mit Endbeschirmungen
Règle de mesure télescopique pourvue d'extrémités protégées

(30) Priority: 29.07.1996 IT MI960545 U
(43) Date of publication of application: 04.02.1998
(73) Proprietor: METRICA S.p.A., 20097 San Donato Milanese (Milano) (IT)
(72) Inventor: Doriguzzi Bozzo, Mario., 20097 San Donato Milanese, Milano (IT)
(74) Representative: Cicogna, Franco

(56) References cited:
- AU-B- 545 554
- US-A- 3 492 737

## Description

### BACKGROUND OF THE INVENTION

The present invention relates to a telescopic measurement instrument provided with a protective device for protecting the ground bearing end thereof, that is the end of the instrument which is supported on the ground.

As is known, telescopic measurement instruments are increasingly used in the measurement instrument field.

These telescopic measurement instruments, in particular, comprise an assembly of a lot of decreasing cross-section tubular elements which, by sliding one within the other, can be extended up to a comparatively great length, for example 10 meters, starting from a compact size as all of the elements are withdrawn one within the other.

The extension degree can be read-out on a graduated scale arranged outside of each telescopic element, or through a window bearing a reference mark, therewithin a graduated strip can slide, which is connected to the movable end portion of a telescopic element, or on a digital display, displaying the extension degree of a strip provided with a plurality of even pitch holes, this strip being also coupled to the movable end portion of a first telescopic element.

These telescopic measurement instruments are mainly used on building sites, on the ground of which are frequently present water, mud, sand and so on.

Prior telescopic instruments for the intended application are affected by the drawback that, as the telescopic instrument is abutted against the ground in a vertical position in order to carry out a measurement, or it is arranged in a rest position, mud and sand are susceptible to enter the instrument thereby negatively affecting the operation thereof since the metal elements of the instrument will tend to quickly rust, thereby quickly rendering the measurement instrument ineffective.

In this connection it should be pointed out that the mentioned measurement instruments conventionally comprise aluminium tubular elements provided with a terminal portion including a metal or plastic material plate following the element contour and operating as a reference abutment element during the measurement operation proper.

Moreover, the provision in the tube hollow portion of further mechanisms as necessary for operating the measurement instrument, will require that holes be formed through the side walls near the outermost tubular element bottom portion holding the overall mechanism.

In order to provide the measurement instrument with water, mud and sand sealing features, it would be necessary to apply specifically designed gaskets between the outer tubular element and terminal element as well as it would be necessary to seal by silicone or equivalent products all of the provided holes.

On the other hand, some holes frequently operates as receiving holes for receiving locking pins for operating as limit elements for the sliding movement of a tubular element within another tubular element, thereby it would not be possible to seal by silicone also these holes.

The document A U-B-545 554 discloses a telescopic measurement instrument having inner and outer tubes sealed by a complex sealing arrangement with respect to one another.

### SUMMARY OF THE INVENTION

Accordingly, the aim of the present invention is to overcome the above mentioned drawbacks, by providing a telescopic measurement instrument with protective means for specifically protecting the ground bearing portion of said instruments, (that is the bottom end portion of the instrument bearing on it supported by the ground, effective to tightly seal all of the openings or holes as provided at the instrument ground bearing portion, without the need of modifying the conventional construction of said measurement instruments or performing complex sealing operations.

Within the scope of the above mentioned aim, a main object of the present invention is to provide such a telescopic measurement instrument which is very reliable and safe in operation.

Yet another object of the present invention is to provide such a telescopic measurement instruments which can be easily made starting from easily commercially available elements and materials and which, moreover, is very competitive from a mere economic standpoint.

According to the present invention, the above mentioned aim and objects, as well as yet other objects, which will become more apparent hereinafter, are achieved by a telescopic measurement instrument provided with a protective device for protecting the ground bearing ends thereof, according to claim 1.

### BRIEF DESCRIPTION OF THE DRAWINGS

Further characteristics and advantages of the present invention will become more apparent hereinafter from the following detailed disclosure of a telescopic measurement instruments provided with a protective device for protecting the ground bearing portions thereof, according to the invention, which is illustrated, by way of an indicative but not limitative example, in the accompanying drawings, where:

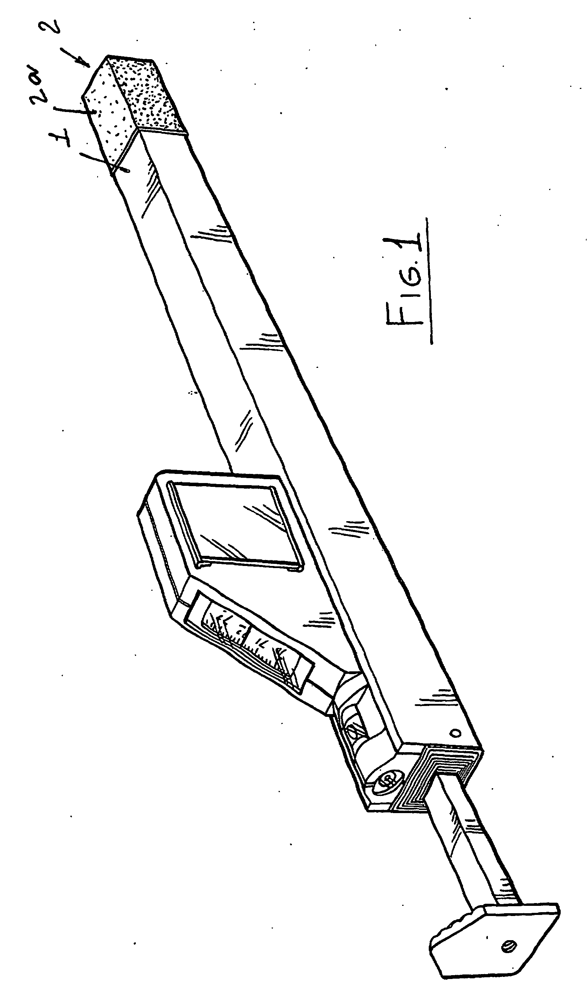

Figure 1 is a schematic perspective view illustrating the measurement telescopic instrument according to the present invention;
Figure 2 illustrates a modified embodiment for applying the impermeable protective cap.

### DESCRIPTION OF THE PREFERRED EMBODIMENTS

With reference to the number references of the figures of the accompanying drawings, the telescopic measurement instrument 1, provided with protective means for protecting the ground bearing foot 3 thereof, has the main feature that it comprises, moreover, an impermeable cap 2, provided with side walls tightly engaging with the side surface of the mentioned ground bearing foot 3, that is the instrument foot supported by be ground.

The latter, as shown, is coupled to a bottom ground bearing plate 4, having a suitable thickness.

The cap 2 has being specifically designed for tightly closing and water proofing the ground bearing foot 3, provided with said bottom plate 4, so as to seal the holes 5 and openings 6 receiving the set screws for affixing the tubular elements 1, as well as for sealing all the openings provided for coupling the several elements forming conventional telescopic measurement instruments.

Thus, the impermeable cap. 2, which is made of a soft resilient rubber or latex material or other resilient impermeable material, and has a shape related to the configuration of the tubular element 1, can provide a perfect tight closure of the instrument.

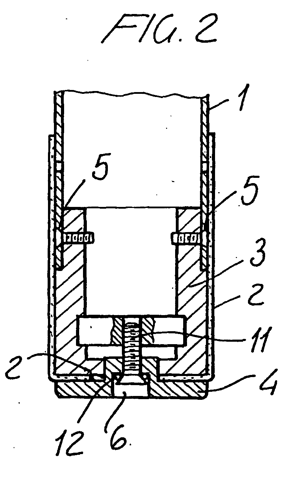

In this connection it should be pointed that cap element 2 is restrained, at the head end portion thereof, by the bottom plate 4 (see in particular figure 2).

A flat or conical head screw 11 is moreover provided, on which is engaged an O-ring 12, in order to restrain the closure bottom plate 4 so as to seal the open bottom of the impermeable membrane.

From the above disclosure it should be apparent that the invention fully achieves the intended aim and objects.

In particular, it is pointed out that an impermeable cap 2 has been provided which allows to impermeabilize and seal the bottom portion of the measurement telescopic instrument 1, thereby allowing said instruments to be also used on grounds on which water, mud or sand are present, without negatively affecting the instrument operation or duration.

In practicing the invention, the used materials, provided that they are compatible, to the intended application, as well as the contingent size and shapes, can be any, according to requirements.

## Claims

1. A telescopic measurement instrument (1) provided with a protective device (2) for protecting against dirt and moisture an instrument foot (3) supporting said instrument on the ground,
wherein said foot is coupled to a bottom ground bearing plate (4),
wherein the protective device comprises an impermeable cap (2) including side walls (2a) and a bottom portion, said side walls being adapted to tightly engage said instrument foot (3) to tightly cover the instrument foot (3) and holes and openings receiving set screws for the instrument tubular elements so as to seal all of the openings for connecting the several elements constituting said telescopic measurement instrument,
**wherein** said cap (2) is made of a soft resilient rubber, latex material or any other suitable resilient impermeable material, and has a configuration mating that of the bottom end portion of said measurement instrument and that of the foot (3) thereof, and
**wherein** the cap bottom portion is tightly clamped between said bottom ground bearing plate (4) and an end portion of said foot (3) by an assembly comprising a flat or conical head screw (11) on which is engaged a resilient O-ring (12) which assembly tightly couples said plate (4) and said cap (2) to said foot (3).

2. A measurement instrument, according to Claim 1, **characterized in that** said cap (2) has a cap bottom portion having one or more throughgoing holes for engaging therein one or more clamping screws for clamping said plate (4) on an outside portion of said cap (2).

## Patentansprüche

1. Teleskopisches Messlineal (1), das mit einer Beschirmungseinrichtung (2) zum Schützen eines Linealfußes (3), der das Lineal auf dem Boden hält, vor Schmutz und Feuchtigkeit versehen ist,a
wobei der Fuß an eine untere Bodenlagerplatte (4) gekuppelt ist,
wobei die Beschirmungseinrichtung einen undurchlässigen Deckel (2) umfasst, der Seitenwände (2a) und einen unteren Abschnitt beinhaltet, wobei die Seitenwände geeignet sind, eng in den Linealfuß (3) einzugreifen, um den Linealfuß (3) und Löcher und Öffnungen, die Gewindestifte für die Röhrenelemente des Lineals aufnehmen, eng abzudecken, um alle Öffnungen zum Anschließen der verschiedenen Elemente, die das teleskopische Messlineal bilden, abzudichten,
wobei der Deckel (2) aus einem weichen, elastischen Gummi, Latexmaterial oder jedem anderen geeigneten, elastischen Material hergestellt ist und eine Gestaltung aufweist, die mit der des unteren Endabschnitts des Messlineals und der seines Fußes (3) zusammenpasst, und
wobei der untere Deckelabschnitt durch einen Zusammenbau, der eine Senk- oder Kegelschraube (11) umfasst, auf der ein elastischer O-Ring (12) in Eingriff gebracht ist, wobei der Zusammenbau die Platte (4) und den Deckel (2) eng an den Fuß (3) kuppelt, eng zwischen der Bodenlagerplatte (4) und einem Endabschnitt des Fußes (3) eingespannt ist.

2. Messlineal nach Anspruch 1, **dadurch gekennzeichnet, dass** der Deckel (2) einen unteren Deckelabschnitt mit einem oder mehreren Durchgangslöchern aufweist, um darin eine oder mehrere Spannschrauben zum Einspannen der Platte (4) auf einem Außenabschnitt des Deckels (2) in Eingriff zu nehmen.

## Revendications

1. Instrument de mesure télescopique (1) muni d'un dispositif de protection (2) pour protéger contre la saleté et l'humidité un pied d'instrument (3) supportant ledit instrument au sol,
dans lequel ledit pied est couplé à un plateau (4) inférieur de support au sol,
dans lequel le dispositif de protection comprend un opercule imperméable (2) incluant des parois latérales (2a) et une partie inférieure, lesdites parois latérales étant adaptées pour engager fermement ledit pied d'instrument (3) pour recouvrir fermement le pied d'instrument (3) et des orifices et ouvertures recevant des vis de régalage pour les éléments tubulaires de l'instrument afin d'étanchéiser toutes les ouvertures pour connecter les différents éléments constituant ledit instrument de mesure télescopique,
dans lequel ledit opercule (2) est fabriqué en caoutchouc mou résilient, en matériau de latex ou en tout autre matériau imperméable résilient adéquat, et présente une configuration épousant celle de la partie d'extrémité inférieure dudit instrument de mesure et celle du pied (3) de celui-ci, et
dans lequel la partie d'opercule inférieure est fermement fixée entre ledit plateau (4) inférieur de support au sol et une partie d'extrémité dudit pied (3) par un assemblage comprenant une vis (11) à tête plate ou conique, sur laquelle est engagé un joint d'étanchéité (12) résilient, cet assemblage lie fermement ledit plateau (4) et ledit opercule (2) audit pied (3).

2. Instrument de mesure, selon la revendication 1, **caractérisé en ce que** ledit opercule (2) présente une partie inférieure d'opercule possédant un ou plusieurs orifices de passage pour y engager une ou plusieurs vis de fixation pour fixer ledit plateau (4) sur une partie externe dudit opercule (2).
